# EUROPEAN PATENT SPECIFICATION

(11) **EP 1 580 857 B1**
(45) Date of publication and mention of the grant of the patent: **29.08.2012**
(21) Application number: 05251610.1
(22) Date of filing: 17.03.2005
(51) Int. Cl.: H02G 3/06

(54) **Cable trunking and ducting**
Kabelkanal und Kabelrinnen
Chemin et conduite de câbles

(30) Priority: 22.03.2004 GB 0406433
(43) Date of publication of application: 28.09.2005
(73) Proprietor: LEGRAND ELECTRIC LIMITED, Birmingham B19 2LF (GB)
(72) Inventor: Taylor, David Lee, West Midlands WR9 8UH (GB); Qasim, Hezar, Worcestershire WR9 8UH (GB)
(74) Representative: Slingsby, Philip Roy

(56) References cited:
- EP-A- 0 571 307
- EP-A- 0 721 243
- GB-A- 660 919

## Description

The present invention relates to housing structures for routing cabling, and particularly to interconnectable sections of cable trunking and ducting.

Conventional cable trunking and ducting is comprised of sections that are insertable into each other, and after insertion the sections are locked together by screws, generally from below via an open face of the sections used to later insert the cabling before closing with a lid.

EP0721243A describes the use of a resilient tongue on the back plate of a coupling element for coupling two duct sections in order to deal with longitudinal thermal expansion of the two duct sections. EP0571307A describes the use of a coupling lug to achieve a snap coupling between two cable duct sections. GB660919 describes the use of screws to product tight frictional engagement between a channel member and duct lengths.

The present invention is based on the observation that the safety of the operation of connecting the sections of trunking and ducting, particularly in the case of overhead cable trunking and ducting, can be improved without excessive additional cost by modifying the sections such that the action of inserting one into another automatically provides a relatively secure joint before locking the sections together.

There is provided a method according to claim 1, and a combination of a receiving section of cable trunking or ducting and an insert section according to claim 9.

An embodiment of the present invention will now be described, by way of example only, with reference to the accompanying drawings, in which:-
Figure 1 is a plan view and a side view of an insert section of trunking according to an embodiment of the present invention;
Figure 2 shows a cross-section taken through A-A of Figure 1 with the insert section inserted into a receiving section of trunking;
Figure 3 shows a cross-section taken through B-B of Figure 1 with the insert section inserted into a receiving section of trunking; and
Figure 4 shows in more detail the shape of the part of the insert section circled in Figure 3.

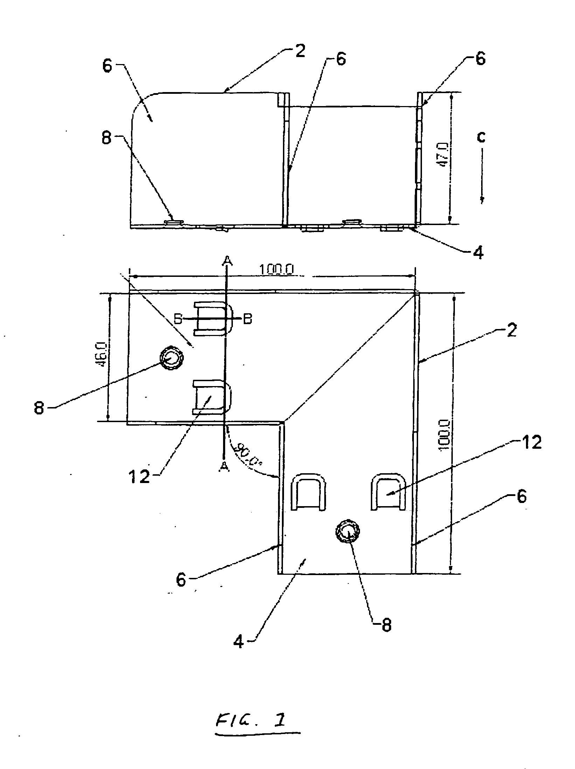

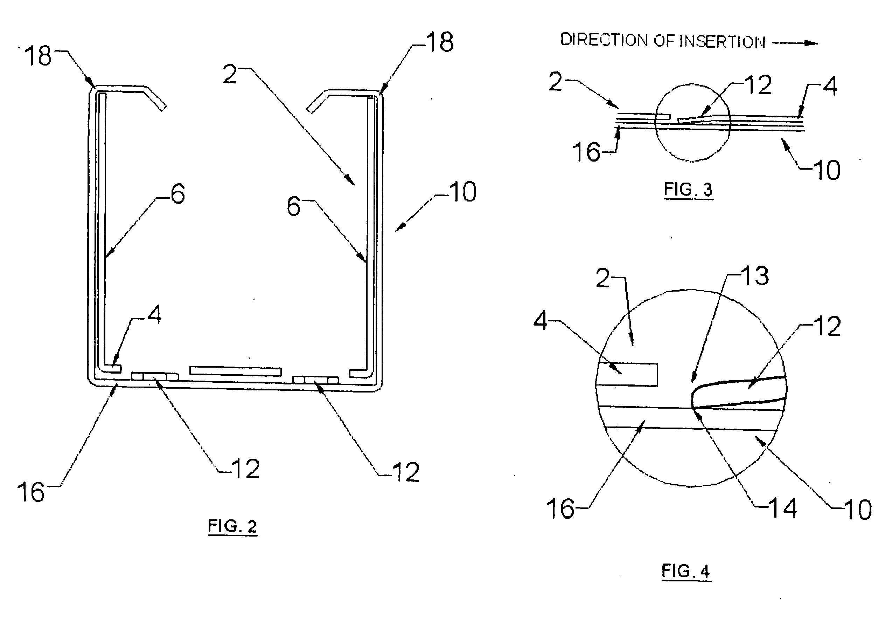

With reference to the accompanying Figures, an embodiment of the present invention comprises an insert section 2 of trunking including a base wall 4 and side walls 6 extending perpendicularly from the base wall 4. In the example shown in the Figures, the insert section 2 is a right-angled section for connecting two receiving sections 10 (one of which one is shown in Figures 2 to 4) of trunking at right-angles to each other. Example dimensions are given in mm in Figure 1. The base wall is provided with threaded holes 8 for screw-locking the insert section 2 to the receiving sections 10.

The base wall 4 of the insert section 2 includes a pair of springy tongue portions 12 at each end. These tongue portions 12 are formed by punching through the base wall in the direction shown by arrow C in Figure 1, i.e. from the inner surface to the outer surface of the base wall, and then bent outwards so that at least the distal end thereof protrudes from the plane of the base wall 4. The punching and bending is done simultaneously using a single tool. This technique of forming the tongue portions provides them with a relatively rounded edge 13 on the inner surface and a relatively sharp edge 14 on the outer surface, the advantage of which is discussed below.

The trunking sections can, for example, be made of stainless steel or zinc-galvanised steel, and can be produced by bending a flat sheet of such material that has first been modified to include the tongue portions 12 and threaded holes 8 described above.

The insert section 2 is connected to a receiving section 10 by sliding the insert section into the receiving section 10, which is of slightly larger dimensions, in a direction parallel to the longitudinal axis of the sections. The act of inserting the insert section 2 into the receiving section 10 has the effect of biasing the tongue portions against the base wall 16 of the receiving section 10, by virtue of the upper lips 18 (which also serve to support the lid (not shown) which is later fitted to hide the cabling after it has been housed in the trunking) of the receiving section 10 acting against the tops of the side walls 6 of the insert section 2 to limit the upwards movement the insert section 2 inside the receiving section 10. The dimensions of the receiving section 10 are selected such that the insert section 2 can not be inserted into the receiving section without some movement of the tongue portions away from their free position. The increased contact forces reduce the risk of the two sections becoming accidentally disconnected before the sections are locked together with screws (as mentioned above), and also reduce the electrical resistance between the two sections thereby improving the performance of the trunking as an electrical pathway to earth. With the insert and receiving sections thus assembled, rotating a screw (not shown) in the locking direction within the threaded hole 8 acts to force the tip of the screw against the base wall of the respective receiving section and thereby further increase the force of contact between the insert and receiving sections.

The tongue portions 12 ensure that there is good frictional contact between the two sections regardless of any small variation in the dimensions of the trunking sections.

The contact between the two sections is also improved by having a relatively sharp edge on the surface of the tongued portion in contact with the base wall of the receiving section. This sharp edge and the fact that the tongued portions are pointed in reverse to the direction of insertion serves to reduce the risk of the two section becoming accidentally disconnected before the sections are locked together with screws. Also the sharp edge has the effect of scratching the base wall of the receiving section, which is advantageous for providing a low resistance electrical pathway to earth.

Although shown in Figure 2 with the base walls 4, 16 at the bottom, in the case of overhead cable trunking and ducting, the sections would be mounted such that the base walls 4, 16 are at the top so that cabling can be inserted into the sections from below. After inserting the cabling into the trunking, a lid (not shown) would normally be fitted to the underside of the trunking to hide the cabling.

As mentioned above, the embodiment shown in the Figures and described in detail above is only one example of how the invention could be carried out, and is not intended to be limiting in any way. For example, the following modifications are possible.
(a) The insert section 2 could, for example, be a straight section. (b) The insert section 2 could, for example, be an end section having only one open end for connection to a single receiving section, or it could have more than two open ends, such as a crosspiece having four open ends arranged at right angles to each other for connection to four receiving sections. (c) The tongue portions 12 could be provided on the receiving section 10 rather than the insert section 2, or the tongue portions 12 could be provided on both the insert and receiving sections. (d) The tongue portions 12 could be provided on either or both of the side walls rather than on the base wall. (e) Only a single tongue portion (or more than two tongue portions) could be provided at each open end instead of the pair shown in Figure 1.

In view of the foregoing description it will be evident to a person skilled in the art that various modifications may be made within the scope of the invention.

## Claims

1. A method of connecting a receiving section (10) of cable trunking or ducting and an insert section (2) that is insertable into the receiving section, wherein at least one of the receiving and insert sections includes at least one wall (4) that has a portion thereof modified to provide a resilient protrusion (12) that becomes biased against a wall (16) of the other of the receiving and insert sections upon insertion of the insert section into the receiving section, the method including the steps of: inserting the insert section into the receiving section, and with the resilient portion of one section biased against a wall (16) of the other locking the two sections together by separate locking means (8).

2. A method according to claim 1, wherein the resilient protrusion is provided by a tongue portion (12) bent out of the plane of the wall (4).

3. A method according to claim 2, wherein the tongue portion has a sharper edge on the surface for contact with a wall (16) of the other of the receiving and insert sections than it does on its opposite surface.

4. A method according to claim 2 or claim 3, wherein the tongue portion has a tip pointing against the direction of insertion.

5. A method according to any preceding claim, wherein at least one of the insert and receiving sections includes a threaded hole (8) for receiving a screw and wherein the step of locking the insert and receiving sections together includes rotating a screw within the threaded hole so as to force the tip of the screw against a wall (16) of the other of the two sections and thereby further increase the force of contact between the insert and receiving sections.

6. A method according to any of claims 1 to 4, wherein the separate locking means includes a rotary locking member, and wherein the locking step includes rotating said rotary member so as to further increase the contact forces between the insert and receiving sections.

7. A method of routing cabling, the method including connecting at least two sections of cable trunking or ducting according to the method of any of claims 1 to 6, and housing cabling in said at least two sections.

8. A method according to claim 7, wherein the insert section is inserted into the receiving section in a direction parallel to that in which the cabling runs through the two sections.

9. A combination of a receiving section (10) of cable trunking or ducting and an insert section (2) that is insertable into the receiving section, wherein at least one of the receiving and insert sections includes at least one wall (4) that has a portion thereof modified to provide a resilient protrusion (12) that becomes biased against a wall (16) of the other of the receiving and insert sections upon insertion of the insert section into the receiving section, and separate locking means (8) operable with the resilient portion (12) of one section biased against a wall (16) of the other so as to further increase the force of contact between the insert and receiving sections.

10. A combination according to claim 9, wherein the resilient protrusion is provided by a tongue portion bent out of the plane of the wall and has a tip pointing against the direction of insertion, and wherein a wall of one of the insert and receiving sections defines a threaded hole for receiving a screw for locking the two sections together.

11. A combination according to claim 10, wherein the tongue portion has a sharper edge on the surface for contact with a wall of the other of the receiving and insert sections than it does on its opposite surface.

12. A method according to any of claims 1 to 8, wherein the resilient protrusion is provided by a tongue portion (12) bent out of the plane of the wall and has a tip pointing against the direction of insertion, wherein the tongue portion is provided by: punching through a portion of at least one wall (4) of at least one of the insert and receiving sections so as to define said tongue portion in the wall, and then bending the tongue portion out of the plane of the wall to provide said resilient protrusion; and wherein the punching step is performed in the same direction in which the tongue portion is bent out of the plane of the wall.

13. A method according to claim 12, wherein the punching and bending steps are carried out with a single tool.

14. A method according to claim 12, wherein the punching and bending steps are carried out simultaneously.

## Patentansprüche

1. Verfahren zum Verbinden eines Aufnahmeabschnitts (10) eines Kabelkanals oder einer Kabelrinne und eines Einführabschnitts (2), der in den Aufnahmeabschnitt einführbar ist, wobei mindestens einer des Aufnahmeabschnitts oder des Einführabschnitts mindestens eine Begrenzung (4) aufweist, die einen Teil aufweist, der hiervon abgeändert ist, um einen elastischen Vorsprung (12) bereitzustellen, der gegen eine Begrenzung (16) des anderen des Aufnahmeabschnitts oder des Einführabschnitts durch ein Einführen des Einführabschnitts in den Aufnahmeabschnitt vorgespannt wird, wobei das Verfahren die Schritte aufweist: Einführen des Einführabschnitts in den Aufnahmeabschnitt, und mit dem elastischen Vorsprung des einen Abschnitts, der gegen die Begrenzung (16) der anderen vorgespannt ist, Verriegeln der beiden Abschnitte miteinander durch ein separates Verriegelungsmittel (8).

2. Verfahren nach Anspruch 1, wobei der elastische Vorsprung mit einem Zungenteil (12) bereitgestellt wird, der aus der Ebene der Begrenzung (4) heraus gebogen ist.

3. Verfahren nach Anspruch 2, wobei der Zungenteil eine schärfere Kante an der Oberfläche zum Kontakt mit einer Begrenzung (16) des anderen des Aufnahmeabschnitts oder des Einführabschnitts als an der entgegen gesetzten Oberfläche hat.

4. Verfahren nach Anspruch 2 oder Anspruch 3, wobei der Zungenteil eine Spitze hat, die gegen die Richtung der Einführung zeigt.

5. Verfahren nach einem der vorhergehenden Ansprüche, wobei mindestens einer des Einführabschnitts oder des Aufnahmeabschnitts eine Gewindebohrung (8) zum Aufnehmen einer Schraube aufweist und wobei der Schritt des Verriegelns des Einführabschnitts und des Aufnahmeabschnitts ein Drehen einer Schraube in der Gewindebohrung aufweist, um die Spitze der Schraube gegen eine Begrenzung (16) des anderen der beiden Abschnitte zu zwingen und dabei die Kontaktkraft zwischen dem Einführabschnitt und dem Aufnahmeabschnitt weiter zu erhöhen.

6. Verfahren nach einem der Ansprüche 1 bis 4, wobei das separate Verriegelungsmittel ein drehbares Verriegelungselement aufweist, und wobei der Schritt des Verriegelns ein Drehen des drehbaren Elements aufweist, um die Kontaktkräfte zwischen dem Einführabschnitt und dem Aufnahmeabschnitt weiter zu erhöhen.

7. Verfahren zur Streckenführung von Verkabelung, wobei das Verfahren ein Verbinden von mindestens zwei Abschnitten eines Kabelkanals oder einer Kabelrinne gemäß dem Verfahren nach einem der Ansprüche 1 bis 6 und ein Einschließen einer Verkabelung in den mindestens zwei Abschnitten aufweist.

8. Verfahren nach Anspruch 7, wobei der Einführabschnitt in den Aufnahmeabschnitt in einer Richtung parallel zu der eingeführt wird, in der die Verkabelung durch die beiden Abschnitte verläuft.

9. Kombination eines Aufnahmeabschnitts (10) eines Kabelkanals oder einer Kabelrinne und eines Einführabschnitts (2), der in den Aufnahmeabschnitt einführbar ist, wobei mindestens einer des Aufnahmeabschnitts oder des Einführabschnitts mindestens eine Begrenzung (4) aufweist, die einen Teil aufweist, der hiervon abgeändert ist, um einen elastischen Vorsprung (12) bereitzustellen, der gegen eine Begrenzung (16) des anderen des Aufnahmeabschnitts oder des Einführabschnitts durch ein Einführen des Einführabschnitts in den Aufnahmeabschnitt vorgespannt wird, und ein separates Verriegelungsmittel (8) aufweist, das mit dem elastischen Vorsprung (12) eines Abschnittes, der gegen eine Begrenzung (16) des anderen vorgespannt ist, um die Kontaktkraft zwischen dem Einführabschnitt und dem Aufnahmeabschnitt weiter zu erhöhen.

10. Kombination nach Anspruch 9, wobei der elastische Vorsprung durch ein Zungenteil bereitgestellt wird, der aus der Ebene der Begrenzung (4) heraus gebogen ist und eine Spitze hat, die gegen die Richtung der Einführung zeigt, und wobei eine Begrenzung des Einführabschnitts oder des Aufnahmeabschnitts eine Gewindebohrung (8) zum Aufnehmen einer Schraube festlegt, um die beiden Abschnitte miteinander zu verriegeln.

11. Kombination nach Anspruch 10, wobei der Zungenteil eine schärfere Kante an der Oberfläche zum Kontakt mit einer Begrenzung (16) des anderen des Aufnahmeabschnitts oder des Einführabschnitts als an der entgegen gesetzten Oberfläche hat.

12. Verfahren nach einem der Ansprüche 1 bis 8, wobei der elastische Vorsprung durch ein Zungenteil bereitgestellt wird, der aus der Ebene der Begrenzung (4) heraus gebogen ist, und eine Spitze hat, die gegen die Richtung der Einführung zeigt, wobei der Zungenteil bereitgestellt wird durch: Stanzen durch einen Teil mindestens einer Begrenzung (4) von mindestens dem Einführabschnitt oder dem Aufnahmeabschnitt, um den Zungenteil in der Begrenzung festzulegen, und dann Biegen des Zungenteils aus der Ebene der Begrenzung heraus, um den elastischen Vorsprung bereitzustellen; und wobei der Schritt des Stanzen in der gleichen Richtung durchgeführt wird, in die der Zungenteil aus der Ebene der Begrenzung heraus gebogen ist.

13. Verfahren nach Anspruch 12, wobei die Schritte des Stanzens und des Biegens mit einem einzigen Werkzeug ausgeführt werden.

14. Verfahren nach Anspruch 12, wobei die Schritte des Stanzens und des Biegens gleichzeitig ausgeführt werden.

## Revendications

1. Procédé pour raccorder une section de réception (10) de gaines ou conduits de câbles et une section d'insertion (2) qui peut être insérée dans la section de réception, au moins l'une des sections de réception et d'insertion comprenant au moins une paroi (4) dont une partie est modifiée pour constituer une saillie élastique (12) qui devient sollicitée contre une paroi (16) de l'autre des sections de réception et d'insertion lorsque la section d'insertion est insérée dans la section de réception, le procédé comprenant les étapes consistant à : insérer la section d'insertion dans la section de réception, la saillie élastique d'une section sollicitée contre une paroi (16) de l'autre verrouillant les deux sections l'une à l'autre par un moyen de verrouillage distinct (8).

2. Procédé selon la revendication 1, dans lequel la saillie élastique est constituée par une partie formant languette (12) pliée hors du plan de la paroi (4).

3. Procédé selon la revendication 2, dans lequel la partie formant languette présente une arête plus vive sur la surface destinée à venir au contact d'une paroi (16) de l'autre des sections de réception et d'insertion que sur sa surface opposée.

4. Procédé selon la revendication 2 ou la revendication 3, dans lequel la partie formant languette présente une extrémité pointant à l'encontre de la direction d'insertion.

5. Procédé selon l'une quelconque des revendications précédentes, dans lequel au moins l'une des sections d'insertion et de réception comprend un trou taraudé (8) destiné à recevoir une vis et dans lequel l'étape de verrouillage des sections d'insertion et de réception l'une à l'autre comprend la rotation d'une vis dans le trou taraudé afin de contraindre l'extrémité de la vis contre une paroi (16) de l'autre des deux sections et donc d'accroître encore la force de contact entre les sections d'insertion et de réception.

6. Procédé selon l'une quelconque des revendications 1 à 4, dans lequel le moyen de verrouillage distinct comprend un élément de verrouillage rotatif, et dans lequel l'étape de verrouillage comprend la rotation dudit élément rotatif afin d'accroître encore les forces de contact entre les sections d'insertion et de réception.

7. Procédé de tracé de câblage, le procédé comprenant le raccordement d'au moins deux sections de gaines ou conduits de câbles suivant le procédé selon l'une quelconque des revendications 1 à 6, et le logement du câblage dans lesdites au moins deux sections.

8. Procédé selon la revendication 7, dans lequel la section d'insertion est insérée dans la section de réception dans une direction parallèle à celle dans laquelle court le câblage dans les deux sections.

9. Combinaison d'une section de réception (10) de gaines ou conduits de câbles et d'une section d'insertion (2) qui peut être insérée dans la section de réception, au moins l'une des sections de réception et d'insertion comprenant au moins une paroi (4) dont une partie est modifiée pour constituer une saillie élastique (12) qui devient sollicitée contre une paroi (16) de l'autre des sections de réception et d'insertion lorsque la section d'insertion est insérée dans la section de réception, et un moyen de verrouillage distinct (8) opérant avec la partie formant languette (12) d'une section sollicitée contre une paroi (16) de l'autre section afin d'accroître encore la force de contact entre les sections de réception et d'insertion.

10. Combinaison selon la revendication 9, dans laquelle la saillie élastique est constituée d'une partie formant languette pliée hors du plan de la paroi et présente une extrémité pointant à l'encontre de la direction d'insertion, et dans laquelle une paroi de l'une des sections d'insertion et de réception définit un trou taraudé destiné à recevoir une vis pour verrouiller les deux sections l'une à l'autre.

11. Combinaison selon la revendication 10, dans laquelle la partie formant languette présente une arête plus vive sur la surface destinée à venir au contact d'une paroi de l'autre des sections de réception et d'insertion que sur sa surface opposée.

12. Procédé selon l'une quelconque des revendications 1 à 8, dans lequel la saillie élastique est constituée par une partie formant languette (12) pliée hors du plan de la paroi et présente une extrémité pointant à l'encontre de la direction d'insertion, la partie formant languette étant réalisée par les étapes consistant à poinçonner dans une partie d'au moins une paroi (4) d'au moins l'une des sections d'insertion et de réception afin de définir ladite partie formant languette dans la paroi, puis plier la partie formant languette hors du plan de la paroi pour constituer ladite saillie élastique ; et l'étape de poinçonnage est réalisée dans la même direction que celle dans laquelle la partie formant languette est pliée hors du plan de la paroi.

13. Procédé selon la revendication 12, dans lequel les étapes de poinçonnage et pliage sont réalisées au moyen d'un seul outil.

14. Procédé selon la revendication 12, dans lequel les étapes de poinçonnage et pliage sont réalisées simultanément.
